# EUROPÄISCHE PATENTANMELDUNG

(11) **EP 3 798 461 A1**
(43) Veröffentlichungstag der Anmeldung: **31.03.2021**
(21) Anmeldenummer: 20203572.1
(22) Anmeldetag: 11.08.2016
(51) Int. Cl.: F16D 25/10, F16D 21/06

(54) **KUPPLUNGSEINRICHTUNG FÜR HYBRIDANTRIEB**

(30) Priorität: 20.08.2015 DE 102015215876
(62) Teilanmeldung aus: 16765917.6
(71) Anmelder: Schaeffler Technologies AG & Co. KG, 91074 Herzogenaurach (DE)
(72) Erfinder: Lorenz, Elmar, 77836 Rheinmünster Söllingen (DE)

(57) **Zusammenfassung**

Die Erfindung betrifft eine Antriebseinrichtung mit einer Kupplungseinrichtung, einem Gehäuse und einem ersten Antriebsmotor, wobei die Kupplungseinrichtung eine erste Eingangsseite, eine zweite Eingangsseite, eine erste Ausgangsseite, eine zweite Ausgangsseite, eine erste Kupplung, eine zweite Kupplung und eine dritte Kupplung umfasst, wobei die Eingangsseiten und die Ausgangsseiten um eine gemeinsame Drehachse drehbar sind, wobei die erste Eingangsseite mit dem ersten Antriebsmotor drehmomentschlüssig gekoppelt ist, wobei die zweite Eingangsseite mit einem zweiten Antriebsmotor koppelbar ist, wobei die erste Kupplung zwischen der ersten Eingangsseite und der ersten Ausgangsseite angeordnet ist, wobei die zweite Kupplung zwischen der ersten Eingangsseite und der zweiten Ausgangsseite angeordnet ist, wobei die dritte Kupplung zwischen der ersten Eingangsseite und der zweiten Eingangsseite angeordnet ist. Das Gehäuse begrenzt zumindest abschnittweise einen Gehäuseinnenraum, wobei der Gehäuseinnenraum mit einer Kühlflüssigkeit füllbar ist, wobei in dem Gehäuseinnenraum die Kupplungseinrichtung und der erste Antriebsmotor angeordnet sind.

## Beschreibung

Die Erfindung betrifft eine Kupplungseinrichtung gemäß Patentanspruch1. Insbesondere betrifft die Erfindung eine Kupplungseinrichtung für einen Hybridantrieb.

Ein Kraftfahrzeug verfügt über einen ersten Antriebsmotor, der als elektrische Maschine ausgeführt ist, und einen zweiten Antriebsmotor, der als Verbrennungsmotor ausgeführt ist. Der Antrieb des Kraftfahrzeugs kann hybrid, also in einer beliebigen Kombination des ersten und/oder zweiten Antriebsmotors, erfolgen. Dazu ist zwischen den Antriebsmotoren und einem Getriebe des Kraftfahrzeugs eine Kupplungseinrichtung vorgesehen.

DE 10 2009 059 944 A1 betrifft eine Kupplungseinrichtung für ein hybrid antreibbares Kraftfahrzeug.

Es ist Aufgabe der Erfindung, eine verbesserte Antriebseinrichtung bereitzustellen. Diese Aufgabe wird mittels einer Antriebseinrichtung gemäß Patentanspruch 1 gelöst. Vorteilhafte Ausführungsformen sind in den abhängigen Ansprüchen angegeben.

Es wurde erkannt, dass eine verbesserte Antriebseinrichtung dadurch bereitgestellt werden kann, dass die Antriebseinrichtung eine Kupplungseinrichtung, ein Gehäuse und einen ersten Antriebsmotor umfasst. Die Kupplungseinrichtung weist eine erste Eingangsseite, eine zweite Eingangsseite, eine erste Ausgangsseite, eine zweite Ausgangsseite, eine erste Kupplung, eine zweite Kupplung und eine dritte Kupplung auf. Die Eingangsseiten und die Ausgangsseiten sind um eine gemeinsame Drehachse drehbar. Die erste Eingangsseite ist mit dem ersten Antriebsmotor drehmomentschlüssig gekoppelt. Die zweite Eingangsseite ist mit einem zweiten Antriebsmotor koppelbar. Die erste Kupplung ist zwischen der ersten Eingangsseite und der ersten Ausgangsseite angeordnet. Die zweite Kupplung ist zwischen der ersten Eingangsseite und der zweiten Ausgangsseite angeordnet. Die dritte Kupplung ist zwischen der ersten Eingangsseite und der zweiten Eingangsseite angeordnet. Das Gehäuse begrenzt zumindest abschnittsweise einen Gehäuseinnenraum. Der Gehäuseinnenraum ist mit einer Kühlflüssigkeit füllbar. In dem Gehäuseinnenraum sind die Kupplungseinrichtung und der erste Antriebsmotor angeordnet.

Diese Ausgestaltung hat den Vorteil, dass mittels der Kühlflüssigkeit die Kupplungseinrichtung und der erste Antriebsmotor zusammen gekühlt werden können. Dadurch wird eine Überhitzung sowohl des ersten Antriebsmotors als auch der Kupplungseinrichtung vermieden.

In einer weiteren Ausführungsform umfasst der erste Antriebsmotor einen Stator und einen Rotor. Der Rotor ist radial außenseitig der ersten Kupplung und/oder der zweiten Kupplung angeordnet. Der Rotor überlappt zumindest teilweise axial mit der ersten und/oder zweiten Kupplung. Radial außenseitig des Rotors ist der Stator angeordnet. Diese Ausgestaltung hat den Vorteil, dass die Antriebseinrichtung in axialer Richtung besonders kompakt ausgebildet ist. Ferner kann ein hohes Drehmoment durch den Antriebsmotor in die Kupplungseinrichtung eingeleitet werden.

In einer weiteren Ausführungsform ist die erste Kupplung und die zweite Kupplung radial im Wesentlichen auf gleicher Höhe und axial versetzt zueinander angeordnet. Die erste Kupplung umfasst einen ersten Lamellenträger und die zweite Kupplung umfasst einen zweiten Lamellenträger. Der erste Lamellenträger weist eine erste Innenverzahnung auf. Der zweite Lamellenträger weist eine zweite Innenverzahnung auf. Der erste und zweite Lamellenträger sind drehmomentschlüssig mit dem Rotor verbunden. Die Kupplungseinrichtung umfasst ein Verbindungselement. Das Verbindungselement verbindet drehmomentschlüssig den Rotor mit dem ersten und/oder zweiten Lamellenträger.

In einer weiteren Ausführungsform ist das Verbindungselement zumindest abschnittsweise U-förmig ausgebildet. Alternativ ist das Verbindungselement scheibenförmig oder zylindrisch ausgebildet.

Die Aufgabe wird aber auch durch eine Antriebseinrichtung gemäß Patentanspruch 5 gelöst. Vorteilhafte Ausführungsformen sind in den abhängigen Ansprüchen angegeben.

Es wurde erkannt, dass eine verbesserte Antriebseinrichtung dadurch bereitgestellt werden kann, dass die Antriebseinrichtung eine Kupplungseinrichtung, ein Gehäuse und einen ersten Antriebsmotor umfasst. Die Kupplungseinrichtung weist eine erste Eingangsseite, eine zweite Eingangsseite, eine erste Ausgangsseite, eine zweite Ausgangsseite, eine erste Kupplung, eine zweite Kupplung und eine dritte Kupplung auf. Die Eingangsseiten und die Ausgangsseiten sind um eine gemeinsame Drehachse drehbar. Die erste Eingangsseite ist mit dem ersten Antriebsmotor drehmomentschlüssig gekoppelt. Die zweite Eingangsseite ist mit einem zweiten Antriebsmotor koppelbar. Die erste Kupplung ist zwischen der ersten Eingangsseite und der ersten Ausgangsseite angeordnet. Die zweite Kupplung ist zwischen der ersten Eingangsseite und der zweiten Ausgangsseite angeordnet. Das Gehäuse begrenzt zumindest abschnittsweise einen ersten Gehäuseinnenraum und einen zweiten Gehäuseinnenraum. Der zweite Gehäuseinnenraum ist mit einer Kühlflüssigkeit füllbar. Der erste Gehäuseinnenraum ist im Wesentlichen frei von Kühlflüssigkeit. Im zweiten Gehäuseinnenraum ist die Kupplungseinrichtung und in dem ersten Gehäuseinnenraum ist der erste Antriebsmotor angeordnet.

Diese Ausgestaltung hat den Vorteil, dass Flanschverluste der Kühlflüssigkeit im ersten Antriebsmotor vermieden werden. Dadurch kann die Antriebseinrichtung besonders energieeffizient betrieben werden.

In einer weiteren Ausführungsform umfasst der erste Antriebsmotor einen Stator und einen Rotor. Der Rotor ist radial außenseitig der ersten Kupplung und/oder der zweiten Kupplung angeordnet. Der Rotor überlappt zumindest teilweise axial mit der ersten und/oder zweiten Kupplung. Radial außenseitig des Rotors ist der Stator angeordnet. Diese Ausgestaltung hat den Vorteil, dass die Antriebseinrichtung in axialer Richtung besonders kompakt ausgebildet ist. Ferner kann ein hohes Drehmoment durch den Antriebsmotor in die Kupplungseinrichtung eingeleitet werden.

In einer weiteren Ausführungsform ist die erste Kupplung und die zweite Kupplung radial im Wesentlichen auf gleicher Höhe und axial versetzt zueinander angeordnet. Die erste Kupplung umfasst einen ersten Lamellenträger und die zweite Kupplung umfasst einen zweiten Lamellenträger. Der erste Lamellenträger weist eine erste Innenverzahnung auf. Der zweite Lamellenträger weist eine zweite Innenverzahnung auf. Der erste und zweite Lamellenträger sind drehmomentschlüssig mit dem Rotor verbunden. Die Kupplungseinrichtung umfasst ein Verbindungselement. Das Verbindungselement verbindet drehmomentschlüssig den Rotor mit dem ersten und/oder zweiten Lamellenträger.

In einer weiteren Ausführungsform ist das Verbindungselement zumindest abschnittsweise U-förmig ausgebildet. Alternativ ist das Verbindungselement scheibenförmig oder zylindrisch ausgebildet.

In einer weiteren Ausführungsform umfasst das Verbindungselement einen ersten Abschnitt, einen zweiten Abschnitt und wenigstens einen dritten Abschnitt. Der zweite Abschnitt verbindet den ersten Abschnitt mit dem dritten Abschnitt. Der erste Abschnitt und der dritte Abschnitt sind im Wesentlichen parallel zur Drehachse angeordnet. Der dritte Abschnitt ist radial innenseitig zum ersten Abschnitt angeordnet. Radial außenseitig des ersten Abschnitts ist der Rotor auf dem ersten Abschnitt befestigt. Radial innenseitig des dritten Abschnitts ist der erste und zweite Lamellenträger auf dem dritten Abschnitt befestigt.

In einer weiteren Ausführungsform weist das Gehäuse einen Gehäuseabschnitt und wenigstens ein Dichtelement auf. Das Dichtelement ist zwischen dem Verbindungselement und dem Gehäuseabschnitt angeordnet. Das Dichtelement und der Verbindungsabschnitt trennen den ersten Gehäuseinnenraum vom zweiten Gehäuseinnenraum fluidisch. Dadurch wird ein Übertreten der Kühlflüssigkeit aus dem zweiten Gehäuseinnenraum radial nach außen zum ersten Gehäuseinnenraum vermieden.

Nachfolgend wird die Erfindung anhand von Figuren näher erläutert. Dabei zeigen:
Figur 1 einen Halblängsschnitt durch eine Antriebseinrichtung gemäß einer ersten Ausführungsform;
Figur 2 einen Halblängsschnitt durch Antriebseinrichtung gemäß einer zweiten Ausführungsform; und
Figur 3 einen Halblängsschnitt durch Antriebseinrichtung gemäß einer dritten Ausführungsform;

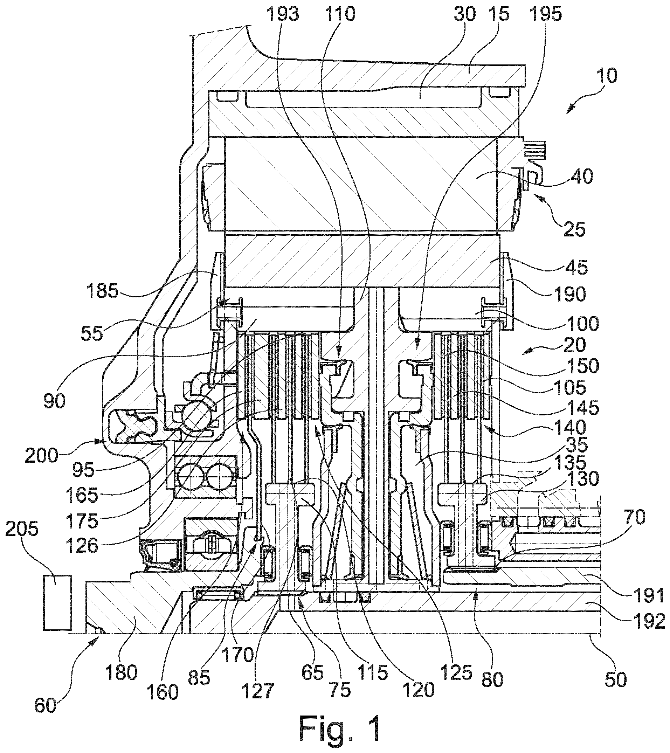

Figur 1 zeigt einen Halblängsschnitt durch eine Antriebseinrichtung 10 gemäß einer ersten Ausführungsform.

Die Antriebseinrichtung 10 weist ein Gehäuse 15, eine Kupplungseinrichtung 20 und einen ersten Antriebsmotor 25 auf. Das Gehäuse 15 begrenzt einen Gehäuseinnenraum 30. Der Gehäuseinnenraum 30 ist mit einer Kühlflüssigkeit 35 füllbar.

In dem Gehäuseinnenraum 30 ist der erste Antriebsmotor 25 und die Kupplungseinrichtung 20 angeordnet. Der erste Antriebsmotor 25 ist als elektrische Maschine ausgebildet. Der erste Antriebsmotor 25 umfasst einen Stator 40 und einen Rotor 45 und ist drehbar um eine Drehachse 50 gelagert. Der Stator 40 ist dabei fest mit dem Gehäuse 15 verbunden. Bevorzugterweise ist der erste Antriebsmotor 25 vom Typ des Innenläufers, sodass der Stator 40 radial außenseitig des Rotors 45 angeordnet ist. Dabei ist weiter bevorzugt, dass der Stator 40 wenigstens eine Magnetspule und der Rotor 45 wenigstens einen Permanentmagneten aufweist. Der erste Antriebsmotor 25 ist dabei radial außenseitig der Kupplungseinrichtung 20 angeordnet.

Die Kupplungseinrichtung 20 weist eine erste Eingangsseite 55, eine zweite Eingangsseite 60, eine erste Ausgangsseite 65 und eine zweite Ausgangsseite 70 auf. Die erste Eingangsseite 55, die zweite Eingangsseite 60 sowie die erste Ausgangsseite 65 und die zweite Ausgangsseite 70 sind drehbar um die Drehachse 50 angeordnet.

Ferner weist die Kupplungseinrichtung 20 eine erste Kupplung 75, eine zweite Kupplung 80 und eine dritte Kupplung 85 auf. Die erste Kupplung 75 liegt zwischen der ersten Eingangsseite 55 und der ersten Ausgangsseite 65. Die zweite Kupplung 80 liegt zwischen der zweiten Eingangsseite 60 und der zweiten Ausgangsseite 70. Die dritte Kupplung 85 ist zwischen der ersten Eingangsseite 55 und der zweiten Eingangsseite 60 angeordnet. In der Ausführungsform sind die Kupplungen 75, 80, 85 radial auf gleicher Höhe angeordnet. Die erste Kupplung 75 ist axial zwischen der dritten Kupplung 85 und der zweiten Kupplung 80 angeordnet.

Der Rotor 45 ist dabei axial überlappend zu den Kupplungen 75, 80, 85 angeordnet. Dabei wird unter einer axialen Überlappung verstanden, wenn der Rotor 45 und die Kupplungen 75, 80, 85 in eine Ebene, in der die Drehachse 50 angeordnet ist, projiziert werden und diese sich überdecken. Dadurch weisen die Kupplungen 75, 80, 85 und der Rotor 45 einen gemeinsamen Bauraum auf.

Die erste Kupplung 75 umfasst einen ersten Lamellenträger 90. Der erste Lamellenträger 90 umfasst eine erste Innenverzahnung 95. Ferner umfasst die zweite Kupplung 80 einen zweiten Lamellenträger 100 mit einer zweiten Innenverzahnung 105. Axial zwischen dem ersten Lamellenträger 90 und dem zweiten Lamellenträger 100 ist ein Flansch 110 angeordnet. Der Flansch 110 ist drehmomentschlüssig mit dem ersten Lamellenträger 90 und dem zweiten Lamellenträger 100 verbunden. Ferner sind der erste Lamellenträger 90 und der zweite Lamellenträger 100 drehmomentschlüssig miteinander verbunden.

Die erste Kupplung 75 umfasst einen dritten Lamellenträger 115. Der dritte Lamellenträger 115 weist eine erste Außenverzahnung 120 auf. Der erste Lamellenträger 90 und der dritte Lamellenträger 115 bilden einen ersten Ringspalt aus, in dem ein erstes Reibpaket 125 angeordnet ist.

Das erste Reibpaket 125 weist einen ersten Reibpartner 126 und einen zweiten Reibpartner 127 auf. Die Reibpartner 126, 127 können bevorzugterweise in einem Stapel abwechselnd zueinander angeordnet sein. Dabei ist in der Ausführungsform beispielhaft der erste Reibpartner 126 als belaglose Reiblamelle und der zweite Reibpartner 127 als Belaglamelle ausgebildet. Auch sind andere Ausgestaltungen des ersten und/oder zweiten Reibpartners 126, 127 denkbar. Der erste Reibpartner 126 ist über die erste Innenverzahnung 95 drehmomentschlüssig mit dem ersten Lamellenträger 90 verbunden. Der zweite Reibpartner 127 ist drehmomentschlüssig über die erste Außenverzahnung 120 drehmomentschlüssig mit dem dritten Lamellenträger 115 verbunden.

Die zweite Kupplung 80 umfasst einen vierten Lamellenträger 130 mit einer zweiten Außenverzahnung 135. Der zweite Lamellenträger 100 und der vierte Lamellenträger 130 bilden einen zweiten Ringspalt aus. In dem zweiten Ringspalt ist ein zweites Reibpaket 140 der zweiten Kupplung 80 angeordnet.

Das zweite Reibpaket 140 weist einen dritten Reibpartner 145 und einen vierten Reibpartner 150 auf. Der dritte Reibpartner 145 ist als belaglose Lamelle ausgebildet, während hingegen beispielhaft der vierte Reibpartner 150 als Belaglamelle ausgebildet ist. Selbstverständlich sind auch andere Ausgestaltungen des dritten und vierten Reibpartners 145, 150 denkbar.

Die dritte Kupplung 85 weist ein drittes Reibpaket 160 mit einem fünften Reibpartner 165 und einem sechsten Reibpartner 170 auf. Der fünfte Reibpartner 165 ist dabei als belaglose Reiblamelle ausgebildet, während hingegen bevorzugterweise der sechste Reibpartner 170 als Belaglamelle ausgebildet ist. Auch können der fünfte und sechste Reibpartner 165, 170 andersartig ausgebildet sein. Axial zwischen dem ersten Reibpaket 125 und dem dritten Reibpaket 160 ist ein Abstützelement 175 vorgesehen, das in seiner axialen Position fest liegt und mit dem ersten Lamellenträger 90 verbunden ist.

Das dritte Reibpaket 160 ist radial auf Höhe des ersten und zweiten Reibpakets 125, 140 angeordnet. Dabei ist der fünfte Reibpartner 165 drehmomentschlüssig über die erste Innenverzahnung 95 mit dem ersten Lamellenträger 90 verbunden.

Die zweite Eingangsseite 60 umfasst einen Kupplungsrotor 180. Der Kupplungsrotor 180 ist drehmomentschlüssig mit dem sechsten Reibpartner 170 des dritten Reibpakets 160 verbunden.

Die Kupplungseinrichtung 20 umfasst ferner ein erstes Verbindungselement 185 und ein zweites Verbindungselement 190. Das Verbindungselement 185, 190 ist bevorzugterweise scheibenförmig ausgebildet. Das Verbindungselement 185, 190 erstreckt sich dabei radial etwa von dem ersten Lamellenträger 90 und dem zweiten Lamellenträger 100 bis radial auf Höhe des Rotors 45 der elektrischen Maschine 25. Dabei ist das erste Verbindungselement 185 bevorzugterweise über eine formschlüssige Verbindung, insbesondere mittels einer Nietverbindung, mit dem ersten Lamellenträger 90 und dem Rotor 45 verbunden, sodass die erste Eingangsseite 55 mit dem Rotor 45 der elektrischen Maschine 25 verbunden ist. Analog dazu verbindet das zweite Verbindungselement 190 den zweiten Lamellenträger 100 mit dem Rotor 45. Das zweite Verbindungselement 190 ist dabei spiegelsymmetrisch zu dem Flansch 110 ausgebildet und verbindet drehmomentschlüssig den zweiten Lamellenträger 100 mit dem Rotor 45. Auch kann auf eines der beiden Verbindungselemente 185, 190 verzichtet werden, da auch der erste Lamellenträger 90 über dem Flansch 110 drehmomentschlüssig mit dem zweiten Lamellenträger 100 verbunden ist.

Der dritte Lamellenträger 115 ist radial innenseitig mit der ersten Ausgangsseite 65 verbunden. Die erste Ausgangsseite 65 ist mit einer ersten Getriebeeingangswelle 191 eines Doppelgetriebes verbunden. Der vierte Lamellenträger 130 ist mit der zweiten Ausgangsseite 70 verbunden. Die zweite Ausgangsseite 70 ist mit einer zweiten Getriebeeingangswelle 192 des Doppelgetriebes verbunden. Das Doppelgetriebe koppelt üblicherweise jede der Getriebeeingangswellen 191, 192 mittels eines anderen Gangradpaars mit einer gemeinsamen Ausgangswelle, die letztlich auf ein Antriebsrad des Kraftfahrzeugs wirkt. Um eine Gangstufe des Doppelgetriebes auszuwählen, wird die erste Kupplung 75 und/oder die zweite Kupplung 80 geschlossen, während die andere Kupplung 75, 80 gegebenenfalls geöffnet bleibt. Bevorzugterweise umfasst das Doppelgetriebe mehrere Gangradpaare, von denen zu einem Zeitpunkt nur eines eingelegt ist.

Zum Schließen und Öffnen der ersten Kupplung 75 umfasst die erste Kupplung 75 eine erste Betätigungseinrichtung 193. Des Weiteren umfasst die zweite Kupplung 80 eine zweite Betätigungseinrichtung 195 und die dritte Kupplung 85 eine dritte Betätigungseinrichtung 200. Bevorzugterweise arbeiten alle Betätigungseinrichtungen 193, 195, 200 hydraulisch und sind jeweils dazu ausgerichtet, eine axiale Betätigungskraft jeweils auf das zugeordnete Reibpaket 120, 140, 160 zur Betätigungseinrichtung 191, 195, 200 zugeordneten Reibpakets 120, 140, 160 auszuüben, sodass die Reibpartner 126, 127, 145, 150, 165, 170 axial aneinander gepresst werden, um einen Reibschluss zu erzeugen und ein Drehmoment zwischen den Reibpartnern 126, 127, 145, 150, 165, 170 zu übertragen. Bevorzugterweise werden die Reibpartner 126, 127, 145, 150, 165, 170 jeweils zwischen der zugeordneten Betätigungseinrichtung 193, 195, 200 und einem axialen Widerlager zusammengepresst. Das axiale Widerlager kann dabei für das erste Reibpaket 125 durch das Abstützelement 175 ausgebildet werden. Ferner kann für das zweite Reibpaket 140 das axiale Widerlager durch einen radial verlaufenden Abschnitt des zweiten Lamellenträgers 100 und für das dritte Reibpaket 160 durch einen radial verlaufenden Abschnitt des ersten Lamellenträgers 90 ausgebildet werden. Weiterhin ist bevorzugt, dass die hydraulischen Betätigungseinrichtungen 193, 195, 200 einzeln und/oder zusammen aktiv gesteuert werden können, indem mittels eines Ventils oder einer Pumpe unter Druck stehendes Druckmedium gezielt in einen hydraulischen Druckraum der Betätigungseinrichtung 191, 195, 200 ein- oder aus ihm abgelassen wird. Alternativ dazu kann auch beispielsweise eine fliehölgesteuerte Betätigungseinrichtung 193, 195, 200 vorgesehen sein. Die axialen Betätigungskräfte der Betätigungseinrichtung 193, 195, 200 sind bevorzugterweise innerhalb der Kupplungseinrichtung 20 abgestützt, sodass keine resultierenden Kräfte nach außen abzustützen sind.

Die zweite Eingangsseite 60 kann mit einem zweiten Antriebsmotor 205, der beispielsweise als Verbrennungsmotor ausgebildet ist, drehmomentschlüssig verbunden sein. Dadurch ist die Antriebseinrichtung 10 insbesondere dazu geeignet, in einem Antriebsstrang des Kraftfahrzeugs eingesetzt zu werden. Dabei kann das Kraftfahrzeug bevorzugterweise hybrid betrieben werden, also alternativ durch den ersten Antriebsmotor 25, den zweiten Antriebsmotor 205 oder beide Antriebsmotoren 25, 205 zusammen. Soll der zweite Antriebsmotor 205, bevorzugterweise der Verbrennungsmotor, genutzt werden, so wird die dritte Kupplung 85 durch die dritte Betätigungseinrichtung 200 geschlossen. Dadurch wird die zweite Eingangsseite 60 drehmomentschlüssig mit der ersten Eingangsseite 55 verbunden. Soll der erste Antriebsmotor 25, also die elektrische Maschine, genutzt werden, so wird sie üblicherweise elektrisch derart angesteuert, dass ein Drehmoment umgesetzt wird. Beide Antriebsmotoren 25, 205 können sowohl positives als auch negatives Drehmoment in die Antriebseinrichtung 10 einbringen. Der erste Antriebsmotor 25 kann auch kinetische Energie aus dem Antriebsstrang aufnehmen und in elektrische Energie umwandeln, die beispielsweise in einem Energiespeicher temporär gespeichert werden kann. Durch seinen kompakten Aufbau eignet sich die Antriebseinrichtung 10 insbesondere zum Einbau vorne quer in dem Kraftfahrzeug.

Die Kupplungen 75, 80, 85 und der erste Antriebsmotor 25 sind in dem gemeinsamen Gehäuseinnenraum 30 angeordnet, sodass Kühlflüssigkeit 35 sowohl an die Kupplungen 75, 80, 85 als auch an den ersten Antriebsmotor 25 strömen kann.

Die Kühlflüssigkeit 35 kann auch als Arbeitsmedium der Betätigungseinrichtung 191, 195, 200 verwendet werden. Die Kupplungen 75, 80, 85 sind beispielhaft vom nasslaufenden Typ und können jeweils als Einscheiben- oder Mehrscheibenkupplung ausgelegt sein. Weiter bevorzugt sind die erste Kupplung 75 und die zweite Kupplung 80 vom Mehrscheibentyp, um ein feinfühliges Öffnen und Schließen des Drehmomentflusses zwischen der ersten Eingangsseite 55 und der ersten Ausgangsseite 65 und/oder der zweiten Ausgangsseite 70 zu erlauben. Die dritte Kupplung 85 kann, wie in Figur 1 dargestellt, vom Einscheibentyp sein. Auch kann die dritte Kupplung 85 vom Mehrscheibentyp sein. Die dritte Kupplung 85 kann aber auch als Schaltkupplung ausgelegt sein, die möglichst nicht unter Schlupf betrieben wird.

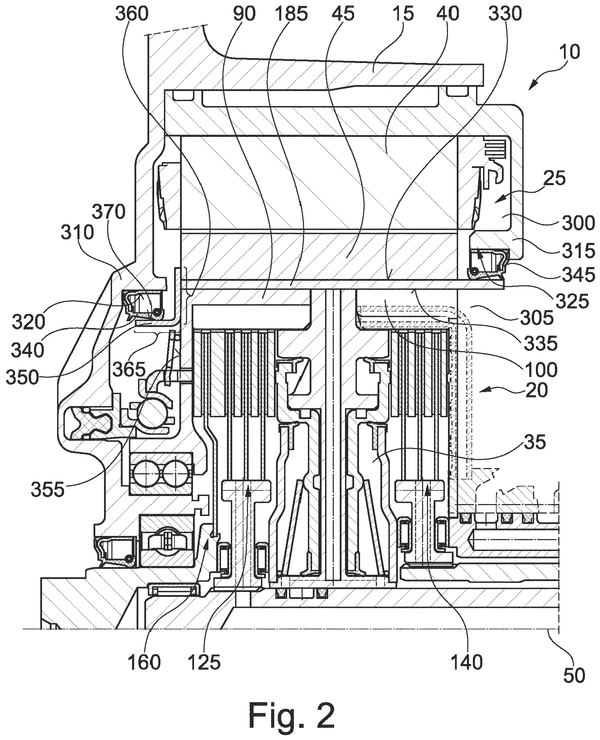

Figur 2 zeigt einen Halblängsschnitt durch eine Antriebseinrichtung 10 gemäß einer zweiten Ausführungsform. Die Antriebseinrichtung 10 ist ähnlich zu der in Figur 1 gezeigten Antriebseinrichtung 10 ausgebildet. Abweichend dazu weist das Gehäuse 15 einen ersten Gehäuseinnenraum 300 und einen zweiten Gehäuseinnenraum 305 auf. Der erste Gehäuseinnenraum 300 ist dabei trocken ausgebildet, sodass im ersten Gehäuseinnenraum 300 bevorzugterweise keine Kühlflüssigkeit 35 vorgesehen ist. Der zweite Gehäuseinnenraum 305 ist als Nassraum ausgebildet. Im zweiten Gehäuseinnenraum 305 ist die Kühlflüssigkeit 35 angeordnet.

Im ersten Gehäuseinnenraum 300 ist der erste Antriebsmotor 25 angeordnet. Im zweiten Gehäuseinnenraum 305 ist die Kupplungseinrichtung 20 angeordnet.

Das Gehäuse 15 weist einen ersten Gehäuseabschnitt 310 und einen zweiten Gehäuseabschnitt 315 auf. Der erste Gehäuseabschnitt 310 erstreckt sich im Wesentlichen in radialer Richtung und weist einen ersten Dichtsitz 320 auf. Der erste Dichtsitz 320 ist dabei zylindrisch um die Drehachse 50 ausgebildet.

Der zweite Gehäuseabschnitt 315 weist einen zweiten Dichtsitz 325 auf. Der zweite Dichtsitz 325 ist zylindrisch um die Drehachse 50 ausgebildet und weist beispielhaft einen anderen Durchmesser auf als der erste Dichtsitz 320.

Abweichend zu Figur 1 weist die Kupplungseinrichtung 20 nur ein Verbindungselement 185 auf. Das Verbindungselement 185 ist dabei zylindrisch ausgebildet. An einer äußeren Umfangsfläche 330 des Verbindungselements 185 ist der Rotor 45 mit dem Verbindungselement 185 drehmomentschlüssig verbunden. An einer inneren Umfangsfläche 335 des Verbindungselements 185 ist der erste Lamellenträger 90 drehmomentschlüssig mit dem Verbindungselement 185 und der zweite Lamellenträger 100 mit dem Verbindungselement 185 verbunden. Die Verbindung zwischen dem ersten Lamellenträger 90 und dem zweiten Lamellenträger 100 mit dem Verbindungselement 185 kann dabei form- und/oder stoff- und/oder kraftschlüssig ausgebildet sein. Ebenso kann der Rotor 45 stoff- und/oder kraft- und/oder formschlüssig mit dem Verbindungselement 185 verbunden sein.

Das Gehäuse 15 umfasst ferner ein erstes Dichtelement 340 und ein zweites Dichtelement 345. Die Dichtelemente 340, 345 sind in der Ausführungsform beispielhaft als Radialdichtringe ausgebildet. Auch können die Dichtelemente 340, 345 andersartig, beispielsweise als O-Ring, ausgebildet sein. Dabei sind die Dichtelemente 340, 345 axial auf gegenüberliegenden Seiten des ersten Lamellenträgers 90 und des zweiten Lamellenträgers 100 angeordnet, sodass die Reibpakete 125, 140, 160 axial zwischen den Dichtelementen 340, 345 angeordnet sind. Dabei ist der zweite Dichtsitz 325 axial überlappend mit einem Teilbereich des Verbindungselements 185 angeordnet, wobei zwischen dem zweiten Dichtsitz 325 und der äußeren Umfangsfläche 330 des Verbindungselements 185 das zweite Dichtelement 345 angeordnet ist. Ferner kann die Kupplungseinrichtung 20 ein Trennelement 350 aufweisen, das beispielhaft L-förmig ausgebildet ist und an einer Stirnseite 355 des ersten Lamellenträgers 90 befestigt ist. Dabei endet das Trennelement 350 mit einem Radialabschnitt 360 radial außenseitig des Verbindungselements 185. Das Trennelement 350 weist ferner einen Axialabschnitt 365 auf, der beispielhaft rechtwinklig zu dem Radialabschnitt 360 angeordnet ist. Der Axialabschnitt 365 ist radial innenseitig zu dem Verbindungselement 185 angeordnet. Zwischen einer äußeren Umfangsfläche 370 des Axialabschnitts 365 und dem ersten Dichtsitz 320, der axial teilweise überlappend zu der äußeren Umfangsfläche 330 des Trennelements 350 angeordnet ist, ist das erste Dichtelement 340 angeordnet.

Das Trennelement 350 kann dabei einstückig und materialeinheitlich mit dem Verbindungselement 185 ausgebildet sein. Auch können das Verbindungselement 185 und das Trennelement 350, wie in Figur 2 gezeigt, mehrteilig ausgebildet sein.

Durch die Dichtelemente 340, 345 sowie das Trennelement 350 und das Verbindungselement 185 kann der erste Gehäuseinnenraum 300 fluidisch vom zweiten Gehäuseinnenraum 305 getrennt werden. Dadurch kann eine Kühlung für die Kupplungseinrichtung 20 sichergestellt werden, während hingegen mögliche Planschverluste in dem ersten Antriebsmotor 25 durch die Kühlflüssigkeit 35 vermieden werden.

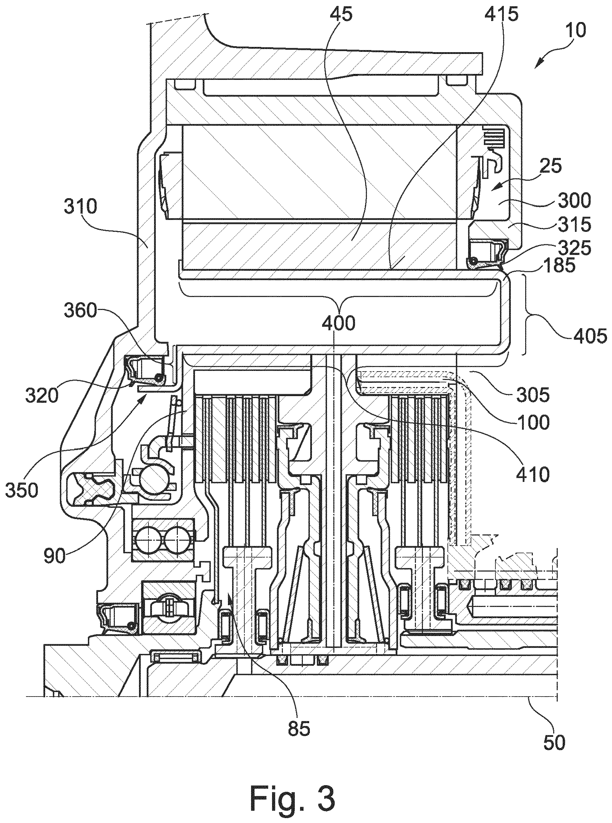

Figur 3 zeigt einen Halblängsschnitt durch Antriebseinrichtung 10 gemäß einer dritten Ausführungsform. Die Antriebseinrichtung 10 ist ähnlich zu der in Figur 2 gezeigten Antriebseinrichtung 10 ausgebildet. Abweichend dazu ist das Verbindungselement 185 und das Trennelement 350, das in Figur 2 gezeigt ist, einstückig und materialeinheitlich ausgebildet. Ferner weist das Verbindungselement 185 einen ersten Abschnitt 400, einen zweiten Abschnitt 405 und einen dritten Abschnitt 410 auf. Der erste Abschnitt 400 und der dritte Abschnitt 410 sind parallel zur Drehachse 50 ausgerichtet Der dritte Abschnitt 410 ist radial innenseitig zum ersten Abschnitt 400 angeordnet. Beispielhaft ist der zweite Abschnitt 405 in einer Drehebene zur Drehachse 50 angeordnet. Der zweite Abschnitt 405 verbindet dabei den ersten Abschnitt 400 mit dem dritten Abschnitt 410. Dadurch ergibt sich eine U-förmige Ausgestaltung im Querschnitt des Verbindungselements 185. An einer äußeren Umfangsfläche 415 des ersten Abschnitts 400 sitzt der Rotor 45 des ersten Antriebsmotors 25 und ist mit dem ersten Abschnitt 400 drehmomentschlüssig verbunden. Ferner liegt das zweite Dichtelement 345 an der äußeren Umfangsfläche 415 des ersten Abschnitts 400 an.

Radial innenseitig des dritten Abschnitts 410 sind der erste Lamellenträger 90 und der zweite Lamellenträger 100 mit dem dritten Abschnitt 410 drehmomentschlüssig verbunden. Stirnseitig auf einer zur dritten Kupplung 85 zugewandten Seite ist der dritte Abschnitt 410 mit einem radial außen liegenden Ende des Radialabschnitts 360 verbunden.

Durch die U-förmige Ausgestaltung des Verbindungselements 185 ergibt sich auch, dass das erste Dichtelement 340 radial versetzt zum zweiten Dichtelement 345 angeordnet ist.

Es wird darauf hingewiesen, dass die oben beschriebenen Merkmale der Antriebseinrichtungen 10 selbstverständlich miteinander kombiniert werden können. Auch ist denkbar, dass die Kupplungseinrichtung 20 in einem Antriebsstrang ohne zweiten Antriebsmotor 205 eingesetzt wird. In so einem Fall kann die dritte Kupplung 85 entfallen. Die erste Eingangsseite 55 und die zweite Eingangsseite 60 fallen dann zusammen.

### Bezugszeichenliste

- 10: Antriebseinrichtung
- 15: Gehäuse
- 20: Kupplungseinrichtung
- 25: erster Antriebsmotor
- 30: Gehäuseinnenraum
- 35: Kühlflüssigkeit
- 40: Stator
- 45: Rotor
- 50: Drehachse
- 55: erste Eingangsseite
- 60: zweite Eingangsseite
- 65: erste Ausgangsseite
- 70: zweite Ausgangsseite
- 75: erste Kupplung
- 80: zweite Kupplung
- 85: dritte Kupplung
- 90: erster Lamellenträger
- 95: erste Innenverzahnung
- 100: zweiter Lamellenträger
- 105: zweite Innenverzahnung
- 110: Flansch
- 115: dritter Lamellenträger
- 120: erste Außenverzahnung
- 125: erstes Reibpaket
- 126: erster Reibpartner
- 127: zweiter Reibpartner
- 130: vierter Lamellenträger
- 135: zweite Außenverzahnung
- 140: zweites Reibpaket
- 145: drittes Reibpartner
- 150: vierter Reibpartner

- 160: drittes Reibpaket
- 165: fünfter Reibpartner
- 170: sechster Reibpartner
- 175: Abstützelement
- 180: Rotor
- 185: erstes Verbindungselement
- 190: zweites Verbindungselement
- 191: erste Getriebeeingangswelle
- 192: zweite Getriebeeingangswelle
- 193: erste Betätigungseinrichtung
- 195: zweite Betätigungseinrichtung
- 200: dritte Betätigungseinrichtung
- 205: zweiter Antriebsmotor

- 300: erster Gehäuseinnenraum
- 305: zweiter Gehäuseinnenraum
- 310: erster Gehäuseabschnitt
- 315: zweiter Gehäuseabschnitt
- 320: erster Dichtsitz
- 325: zweiter Dichtsitz
- 330: äußere Umfangsfläche
- 335: innere Umfangsfläche
- 340: erstes Dichtelement
- 345: zweites Dichtelement
- 350: Trennelement
- 355: Stirnseite des ersten Lamellenträgers
- 360: Radialabschnitt
- 365: Axialabschnitt

- 400: erster Abschnitt
- 405: zweiter Abschnitt
- 410: dritter Abschnitt
- 415: äußere Umfangsfläche des ersten Abschnitts

## Patentansprüche

1. Antriebseinrichtung (10) mit:
- einer Kupplungseinrichtung (20), einem Gehäuse (15) und einem ersten Antriebsmotor (25),
- wobei die Kupplungseinrichtung (20) eine erste Eingangsseite (55), eine zweite Eingangsseite (60), eine erste Ausgangsseite (65), eine zweite Ausgangsseite (70), eine erste Kupplung (75), eine zweite Kupplung (80) und eine dritte Kupplung (85) umfasst,
- wobei die Eingangsseiten (55, 60) und die Ausgangsseiten (65, 70) um eine gemeinsame Drehachse (50) drehbar sind,
- wobei die erste Eingangsseite (55) mit dem ersten Antriebsmotor (25) drehmomentschlüssig gekoppelt ist,
- wobei die zweite Eingangsseite (60) mit einem zweiten Antriebsmotor (205) koppelbar ist,
- wobei die erste Kupplung (75) zwischen der ersten Eingangsseite (55) und der ersten Ausgangsseite (65) angeordnet ist,
- wobei die zweite Kupplung (80) zwischen der ersten Eingangsseite (55) und der zweiten Ausgangsseite (70) angeordnet ist,
- wobei die dritte Kupplung (85) zwischen der ersten Eingangsseite (55) und der zweiten Eingangsseite (60) angeordnet ist,
- wobei das Gehäuse (15) zumindest abschnittweise einen Gehäuseinnenraum (30) begrenzt,
- wobei der Gehäuseinnenraum (30) mit einer Kühlflüssigkeit (35) füllbar ist,
- wobei in dem Gehäuseinnenraum (30) die Kupplungseinrichtung (20) und der erste Antriebsmotor (25) angeordnet sind.

2. Antriebseinrichtung (10) nach Anspruch 1,
- wobei der erste Antriebsmotor (25) einen Stator (40) und einen Rotor (45) umfasst,
- wobei der Rotor (45) radial außenseitig der ersten Kupplung (75) und/oder zweiten Kupplung (80) angeordnet ist,
- wobei der Rotor (45) zumindest teilweise axial überlappend mit der ersten und/oder zweiten Kupplung (75, 80) angeordnet ist,
- wobei radial außenseitig des Rotors (45) der Stator (40) angeordnet ist.

3. Antriebseinrichtung (10) nach Anspruch 2,
- wobei die erste Kupplung (75) und die zweite Kupplung (80) radial überlappend und axial versetzt zueinander angeordnet sind,
- wobei die erste Kupplung (75) einen ersten Lamellenträger (90) und die zweite Kupplung (80) einen zweiten Lamellenträger (100) umfasst,
- wobei der erste Lamellenträger (90) eine erste Innenverzahnung (95) und der zweite Lamellenträger (100) eine zweite Innenverzahnung (105) aufweist,
- wobei der erste und der zweite Lamellenträger (90, 100) drehmomentschlüssig mit dem Rotor (45) verbunden sind,
- wobei die Kupplungseinrichtung (20) ein Verbindungselement (185, 190) umfasst,
- wobei das Verbindungselement (185,190) den Rotor (45) mit dem ersten und/oder zweiten Lamellenträger (90, 100) verbindet.

4. Antriebseinrichtung (10) nach Anspruch 3, wobei das Verbindungselement (185, 190) zumindest abschnittweise U-förmig ausgebildet ist oder scheibenförmig oder zylindrisch ausgebildet ist.

5. Antriebseinrichtung (10) mit:
- einer Kupplungseinrichtung (20), einem Gehäuse (15) und einem ersten Antriebsmotor (25),
- wobei die Kupplungseinrichtung (20) eine erste Eingangsseite (55), eine zweite Eingangsseite (60), eine erste Ausgangsseite (65), eine zweite Ausgangsseite (70), eine erste Kupplung (75), eine zweite Kupplung (80) und eine dritte Kupplung (85) umfasst,
- wobei die Eingangsseiten (55, 60) und die Ausgangsseiten (65, 70) um eine gemeinsame Drehachse (50) drehbar sind,
- wobei die erste Eingangsseite (55) mit dem ersten Antriebsmotor (25) drehmomentschlüssig gekoppelt ist,
- wobei die zweite Eingangsseite (60) mit einem zweiten Antriebsmotor (205) koppelbar ist,
- wobei die erste Kupplung (75) zwischen der ersten Eingangsseite (55) und der ersten Ausgangsseite (65) angeordnet ist,
- wobei die zweite Kupplung (80) zwischen der ersten Eingangsseite (55) und der zweiten Ausgangsseite (70) angeordnet ist,
- wobei die dritte Kupplung (85) zwischen der ersten Eingangsseite (55) und der zweiten Eingangsseite (60) angeordnet ist,
- wobei das Gehäuse (15) zumindest abschnittweise einen ersten Gehäuseinnenraum (300) und einen zweiten Gehäuseinnenraum (305) begrenzt,
- wobei der zweite Gehäuseinnenraum (305) mit einer Kühlflüssigkeit (35) füllbar ist,
- wobei der erste Gehäuseinnenraum (300) im Wesentlichen frei von Kühlflüssigkeit (35) ist,
- wobei in dem zweiten Gehäuseinnenraum (305) die Kupplungseinrichtung (20) und in dem ersten Gehäuseinnenraum (300) der erste Antriebsmotor (25) angeordnet ist.

6. Antriebseinrichtung (10) nach Anspruch 5,
- wobei der erste Antriebsmotor (25) einen Stator (40) und einen Rotor (45) umfasst,
- wobei der Rotor (45) radial außenseitig der ersten Kupplung (75) und/oder zweiten Kupplung (80) angeordnet ist,
- wobei der Rotor (45) zumindest teilweise axial überlappend mit der ersten und/oder zweiten Kupplung (75, 80) angeordnet ist,
- wobei radial außenseitig des Rotors (45) der Stator (40) angeordnet ist.

7. Antriebseinrichtung (10) nach Anspruch 6,
- wobei die erste Kupplung (75) und die zweite Kupplung (80) radial überlappend und axial versetzt zueinander angeordnet sind,
- wobei die erste Kupplung (75) einen ersten Lamellenträger (90) und die zweite Kupplung (80) einen zweiten Lamellenträger (100) umfasst,
- wobei der erste Lamellenträger (90) eine erste Innenverzahnung (95) und der zweite Lamellenträger (100) eine zweite Innenverzahnung (105) aufweist,
- wobei der erste und der zweite Lamellenträger (90, 100) drehmomentschlüssig mit dem Rotor (45) verbunden sind,
- wobei die Kupplungseinrichtung (20) ein Verbindungselement (185) umfasst,
- wobei das Verbindungselement (185) drehmomentschlüssig mit dem Rotor (45) und mit dem ersten und/oder zweiten Lamellenträger (90, 100) verbunden ist.

8. Antriebseinrichtung (10) nach Anspruch 7, wobei das Verbindungselement (185) zumindest abschnittweise U-förmig ausgebildet ist oder scheibenförmig oder zylinderförmig ausgebildet ist.

9. Antriebseinrichtung (10) nach Anspruch 7 oder 8,
- wobei das Verbindungselement (185) einen ersten Abschnitt (400), einen zweiten Abschnitt (405) und wenigstens einen dritten Abschnitt (410) umfasst,
- wobei der zweite Abschnitt (405) den ersten Abschnitt (400) mit dem dritten Abschnitt (410) verbindet,
- wobei der erste Abschnitt (400) und der dritte Abschnitt (410) im Wesentlichen parallel zur Drehachse (50) angeordnet sind,
- wobei der dritte Abschnitt (410) innenseitig zum ersten Abschnitt (400) angeordnet ist,
- wobei radial außenseitig des ersten Abschnitts (400) der Rotor (45) auf dem ersten Abschnitt (400) befestigt ist,
- wobei radial innenseitig des dritten Abschnitts (410) der erste und zweite Lamellenträger (90, 100) auf dem dritten Abschnitt (410) befestigt ist.

10. Antriebseinrichtung (10) nach einem der Ansprüche 8 bis 9,
- wobei das Gehäuse (15) einen Gehäuseabschnitt (310, 315) und wenigstens ein Dichtelement (340, 345) aufweist,
- wobei das Dichtelement (340, 345) zwischen dem Verbindungselement (185) und dem Gehäuseabschnitt (310, 315) angeordnet ist,
- wobei das Dichtelement (340, 345) und der Verbindungsabschnitt (185) den ersten Gehäuseinnenraum (300) vom zweiten Gehäuseinnenraum (305) fluidisch trennen.
